# EUROPEAN PATENT SPECIFICATION

(11) **EP 2 838 294 B1**
(45) Date of publication and mention of the grant of the patent: **18.03.2020**
(21) Application number: 13290192.7
(22) Date of filing: 16.08.2013
(51) Int. Cl.: H04W 52/02

(54) **A transceiver, a network node, telecommunications system and communication method**
Sender-Empfänger, Netzwerkknoten, Telekommunikationssystem und Kommunikationsverfahren
Émetteur-récepteur, noeud de réseau, système de télécommunication et procédé de communication

(43) Date of publication of application: 18.02.2015
(73) Proprietor: Alcatel Lucent, 91620 Nozay (FR)
(72) Inventor: Kucera, Stepan, Dublin 15 (IE); Venkateswaran, Vljay, Dublin 15 (IE); Lopez-Perez, David, Dublin 15 (IE)
(74) Representative: Greenwood, Matthew David

(56) References cited:
- EP-A1- 2 453 706
- WO-A1-2012/114969
- US-A1- 2010 056 184
- US-A1- 2013 189 932
- IMRAN ASHRAF ET AL: "Improving Energy Efficiency of Femtocell Base Stations Via User Activity Detection", WIRELESS COMMUNICATIONS AND NETWORKING CONFERENCE (WCNC), 2010 IEEE, IEEE, PISCATAWAY, NJ, USA, 18 April 2010 (2010-04-18), pages 1-5, XP031706720, ISBN: 978-1-4244-6396-1
- ASHRAF I ET AL: "Power savings in small cell deployments via sleep mode techniques", 2010 IEEE 21ST INTERNATIONAL SYMPOSIUM ON PERSONAL, INDOOR AND MOBILE RADIO COMMUNICATIONS WORKSHOPS (PIMRC WORKSHOPS); 26-30 SEPT. 2010; INSTANBUL, TURKEY, IEEE, PISCATAWAY, NJ, USA, 26 September 2010 (2010-09-26), pages 307-311, XP031837067, ISBN: 978-1-4244-9117-9

## Description

### FIELD OF THE INVENTION

The present invention relates to a transceiver for controlling a network node. In particular, the present invention relates to an ultra-low power transceiver for controlling an energy-sustaining small cell base station.

### BACKGROUND OF THE INVENTION

Small cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as, typically use the customer's broadband internet connection, for example DSL, cable or the like, as backhaul towards the macrocellular network.

Adoption small cells by wireless operators is widespread and with the increasing rate of adoption, the ability to integrate deployed small cells into the existing macrocellular network as seamlessly as possible is becoming increasingly important.

The numbers of small cells in densely populated areas can outnumber the hosting macro cells by a factor of 5 to 10 or more per macro cell sector. The installation cost and the power consumption associated with these small cells can be significant. Therefore, it is desirable to reduce the installation effort and power consumption of these small cells as much as possible. This can be achieved by minimizing backhaul installation by using wireless backhaul, instead of cable/fibre based backhaul, and by reducing power supply installation, for example by using an autonomous source of locally sustainable energy (e.g., solar panels or energy harvesting devices) in combination with storage/back-up battery, instead of cable-connected external power supply.

Small cell base stations operating on the basis of sustainable energy sources may sometimes referred to as energy-sustaining small cells (ESSCs). However, sources of sustainable energy typically do not allow for an uninterrupted duty cycle. Therefore, ESSCs are expected to be activated only on a need-to-communicate basis, e.g., when a nearby mobile device requests large throughput, or if a mobile terminal is located in an area served badly by the hosting macro cell. Generally speaking, ESSCs will remain in a sleep mode for most of their deployment time, while harvesting external energy (e.g., solar and wind energy) and storing it in a battery.

It is therefore desirable to provide techniques that allow an ESSC to be activated in an energy efficient way. It is also desirable to provide techniques that as allow an ESSC to be adaptively configured/re-configured during subsequent ESSC operation. It is also desirable to provide techniques that allow reconfiguration to be efficiently implemented.

US2013/189932 discloses a base station (e.g. for microcells/femtocells) that includes a detecting device, a timer device, a switching device, a receiving device for receiving an uplink signal from the user equipment, and a transmitting device for transmitting a signal to a user equipment. The detecting device is configured to detect existence of user service. When the time without user service counted by the timer device reaches a preset time threshold, the switching device outputs a signal to the transmitting device to switch it off, thereby making the base station operate in a sleep state. The base station may search the triggering signal at different carriers. When the detecting device detects that the receiving device receives a wake-up signal, the switching device in turn outputs a signal to the transmitting device to switch it on, thereby making the base station operate in the wake state. The wake-up signal may be a wake-up signal from a neighboring base station.

### SUMMARY OF THE INVENTION

According to a first aspect of the invention, there is provided an ultra-low power transceiver for controlling an energy-sustaining small cell base station, the energy-sustaining small cell base station operable for communication with a macro cell base station or a user equipment when in activated mode, the energy-sustaining small cell base station being in sleep mode when not in activated mode, the transceiver comprising: a detector operable to detect a control signal from the macro cell base station or the user equipment; a network node determination unit operable responsive to the detector to determine that the detected control signal relates to the energy-sustaining small cell base station; and a controller operable responsive to the determination unit to generate one or more digital control signals based on the detected control signal to control the energy-sustaining small cell base station, so as to switch the energy-sustaining small cell base station from said sleep mode to said activated mode, or vice versa, and depending on the digital control signals, modify and control the operation of the energy-sustaining small cell base station in said activated mode.

The above first aspect enables the acts of waking-up and configuring/re-configuring an energy-sustaining small cell base station in an energy-efficient manner that does not rely on any digital processing, by using sniffer-like circuitry in the energy-sustaining small cell base station that dynamically controls the energy-sustaining small cell base station without relying on the primary communication chain of the energy-sustaining small cell base station.

In an example, the detector may be an energy detector. The detector may be signal detection circuitry or energy detection circuitry. The determination unit may be a decorrelator. The determination unit may be a sequence estimator or user identification unit, such as a CDMA code embedded in a mobile phone. The controller may be a microcontroller.

The determination unit may be enabled when the output of the detector changes by and/or exceeds a threshold value indicating that a control signal has been detected.

The controller may be enabled when the determination unit determines that the control signal relates to the energy-sustaining small cell base station.

In an example, the control signal may be decoded by the network node determination unit.

The controller may be operable to generate a digital control signal to control the operation frequency of the output of the energy-sustaining small cell base station based on the detected control signal.

In an example, the controller may be operable to generate a digital control signal to control the temporal and code dimension output of the energy-sustaining small cell base station.

The controller may be operable to generate a digital control signal to control the power output of the energy-sustaining small cell base station based on the detected control signal.

In an example, the controller may be operable to generate a digital control signal to modulate/vary the power of the signal transmitted from the energy-sustaining small cell base station.

The controller may be operable to generate a digital control signal to control the spatial orientation of the output of the energy-sustaining small cell base station based on the detected control signal.

The detector may comprise two or more detectors operable to detect control signals of different frequencies.

The network node determination unit may be operable to determine that the control signal corresponds to the energy-sustaining small cell base station using a polyphase code or Gold code.

In an example, the network node determination unit may be operable to robustly identify and associate the control signal with the energy-sustaining small cell base station. Such identification may be achieved using a code sequences such as Gold codes (CDMA) or polyphase codes.

In an example, the energy-sustaining small cell base station may be operable in a sleep mode and an awake/active mode.

According to a second aspect of the invention, there is provided an energy-sustaining small cell base station operable for communication with the macro cell base station, wherein the energy-sustaining small cell base station is operable to be controlled by the transceiver according to the first aspect.

The energy-sustaining small cell base station according to the first aspect when in communication with the macro cell base station may form a wireless link for backhaul between the energy-sustaining small cell base station and the macro cell base station.

The energy-sustaining small cell base station may comprise a mixer, a power amplifier and phase-shift beamformers, and wherein the controller of the transceiver is operable to generate one or more digital control signals based on the detected control signal to control the mixer, power amplifier and phase-shift beamformers of the energy-sustaining small cell base station so as to control the operation frequency, power output and spatial orientation of the energy-sustaining small cell base station.

According to a third aspect of the invention, there is provided a telecommunications system, comprising: an energy-sustaining small cell base station; and a macro cell base station, wherein the energy-sustaining small cell base station is operable to communicate with the macro cell base station, and the energy-sustaining small cell base station comprises a transceiver for controlling the energy-sustaining small cell base station according to the first aspect.

According to a fourth aspect of the invention, there is provided a method of controlling an energy-sustaining small cell base station with a transceiver, the energy-sustaining small cell base station operable for communication with a macro cell base station or a user equipment when in activated mode, the energy-sustaining small cell base station being in sleep mode when not in activated mode, the transceiver comprising a detector, a network node determination unit and a controller, the method comprising: detecting a control signal from the macro cell base station or the user equipment at the detector based on determining that the output of the detector exceeds a threshold value, thereby indicating that the control signal has been detected; enabling the determination unit for determining that the detected control signal relates to the energy-sustaining small cell base station; enabling the controller and generating one or more digital control signals based on the detected control signal to control the energy-sustaining small cell base station; and controlling the energy-sustaining small cell base station based on the generated digital control signals so as to switch the energy-sustaining small cell base station from said sleep mode to said activated mode, or vice versa, and depending on the digital control signals, modify and control the operation of the energy-sustaining small cell base station in said activated mode.

According to a fifth aspect of the invention, there is provided a computer program product operable when executed on a computer to perform the method of the above first aspect.

Further particular and preferred aspects of the invention are set out in the accompanying independent and dependent claims.

### BRIEF DESCRIPTION OF THE DRAWINGS

Some embodiments of the apparatus and/or methods in accordance with embodiment of the present invention are now described, by way of example only, with reference to the accompanying drawings, in which:
Figure 1 schematically shows an example of a telecommunications network comprising a plurality of ESSCs and a macro cell;
Figure 2 schematically shows network access of an ESSC using an ultra-low power transceiver and access network/backhaul
Figure 3 schematically shows an ultra-low power transceiver and an ESSC;
Figure 4 schematically shows an ultra-low power transceiver; and
Figure 5 schematically shows ESSC control using an ultra-low power transceiver.

### DESCRIPTION OF EMBODIMENTS

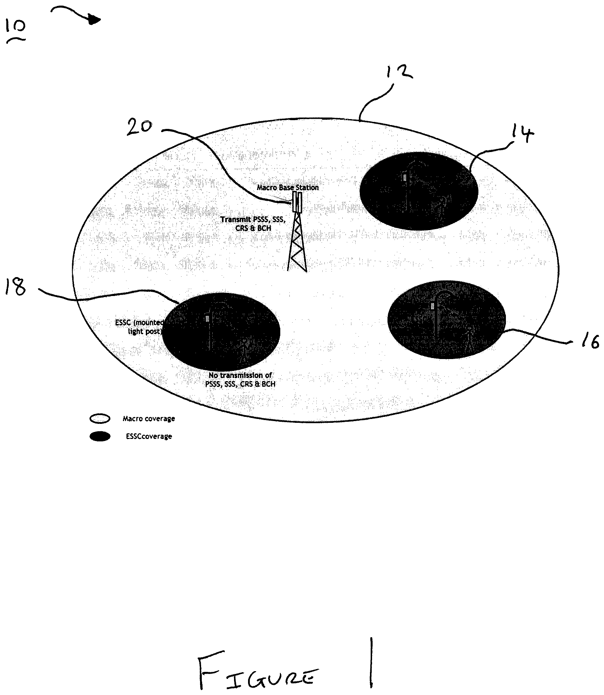

Figure 1 illustrates a heterogeneous telecommunications network 10 comprising a macro cell with a coverage area 12 and a plurality of energy sustaining small cells (ESSCs). The ESSCs comprises a first ESSC 14, a second ESSC 16 and a third ESSC 18. The ESSCs are distributed geographically to provide an area of coverage within the macro cell 12. User equipment may roam through the network 10. When the user equipment is located within the macro cell 12, communications may be established between the user equipment and the macro cell base station 20 over an associated radio link. If a user equipment is located geographically within one of the ESSCs 14, 16, 18, communications may be established between the user equipment and the base station of the associated ESSC over an associated radio link. Of course, it will be appreciated that Figure 1 shows only an example heterogeneous network and that a plurality of macro cells may be provided, more or less than three ESSCs may be provided.

The ESSCs cells provide local communications coverage for a user in their vicinity. As a user equipment comes within range of an ESSC, such as the first ESSC 14, a handover may occur between the base station 20 of the macro cell and the base station of the first ESSC14, when the base station of the first ESSC detects that user equipment has come within range. Likewise, as a user equipment comes within range of a different small cell, a handover may occur between the base station of the current small cell and the base station of the new small cell, when the base station of the new small cell detects that user equipment has come within range.

Generally small cell base stations are externally powered and are therefore generally continually active and do not have a sleep mode of operation, or if a sleep mode is provided for, the sleep mode/wake-up control mechanisms are initiated through the network (backhaul) connections. This approach requires keeping open a channel from the small cell to the network controller, at least sporadically or periodically.

However, ESSCs such as those shown in Figure 1, are small cell base stations operating on the basis of sustainable energy sources that are connected wirelessly to the network. As sustainable energy sources usually operate using energy harvesting, such sources of sustainable energy typically do not allow for an uninterrupted duty cycle. It is therefore desirable that ESSCs are kept in a sleep mode and are only activated on a need-to-communicate basis, e.g., when a nearby mobile device requests large throughput, or if a mobile terminal is located in an area served badly by the hosting macro cell. Generally speaking, ESSCs will remain in a sleep mode for most of their deployment time, while harvesting external energy (e.g., solar and wind energy) and storing it in a battery. Please note that standard components of heterogeneous small cell networks such as pico-cell routers and remote radio heads contain digital processing, FPGA, and control blocks, that are not present in ESSCs.

It is therefore desirable to provide techniques by which energy efficient activation of an ESSC may be performed, as well as adaptively configuring/re-configuring the ESSC (e.g., selection of ESSC frequency band, beam-forming) and enabling ESSC re-configurability during subsequent ESSC operation (e.g., power control).

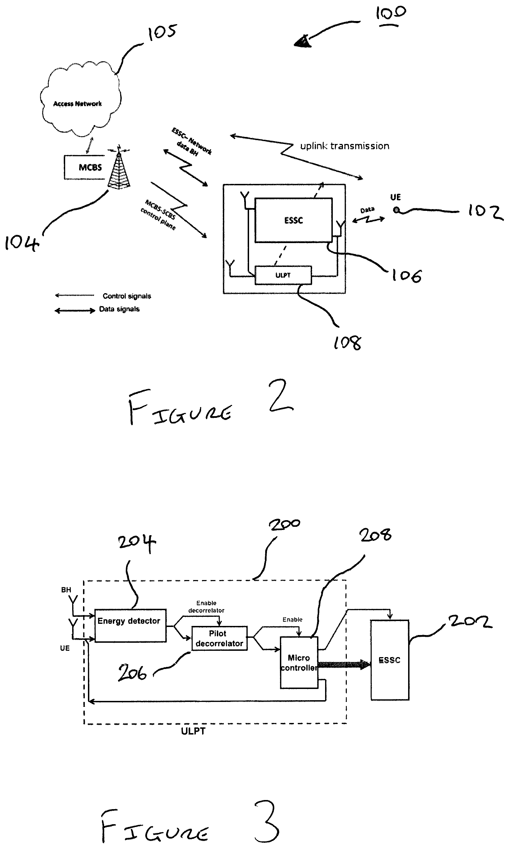

Consider the heterogeneous network 100 as shown in Figure 2, where a user equipment (UE) 102 would like to establish a communication link to a macro-cell base station 104. The macro cell base station 104 is in communication with an access network 105. Compared to a small cell, the macro cell provides for a wider coverage range, but only a limited capacity, mainly due to the larger number of connected UEs and the larger separation distances from its UEs.

The network also contains an ESSC 106 whose default mode is sleep. The ESSC 106 may be in sleep mode over 90% of time. The limited ESSC coverage is contained within the macro cell coverage. Given its closer physical proximity to the UE 102, the ESSC 106 can serve high-rate users. The ESSC 106 may be powered by energy scavenging, such as solar, wind energy and/or battery.

The ESSC 106 may be asleep most of the time and may be connected to an ultra low powered transceiver (ULPT) 108. This ULPT 108 is always turned on to sense the overall network, and listen for wake-up signals/beacon signals/control signals from either the UE 102 or the macro cell base station 104. Note that the ULPT 108 only listens to the signals from the base station and operates at a fraction of the overall power.

The ULPT 108 is responsible for turning the ESSC 106 on when required by the macro cell base station 104 or UE 120 to enable high-data rate communication of the UE 102 and the macro cell base station 104.

Not only does the ULPT 108 operate to actively control the wake-up/sleep modes of an ESSC, it is operable to dynamically control the configuration of the ESSC. In other words, the ULPT 108 acts as a physical interface to the ESSC 106 that can be accessed by both the UE 102 and macro cell base station 104. By offloading the functionality of the sleep control of the ESSC 106 to the ULPT 108, the ULPT 108 minimizes the overall ESSC energy consumption.

In particular, as will be described below, the proposed cross-layered communication architectures effectively control the ESSC by defining ULPT architecture and signaling techniques to dynamically control ESSCs. It should be noted that the term 'control' here refers to dynamic reconfiguration of ESSC parameters such as power amplifier levels, frequency of operation, beamforming/spatial multiplexing, etc., as well as to wake-up and shut down of the ESSC.

The ULPT 108 has ultra-low power consumption while it senses for signals from the UE 102 and/or the access network 105. Thus, the components of ULPT 108 may be limited to energy detectors, passive circuits (RF filters) and a low-power microcontroller with power consumption in the order of milliwatts and can be powered by a small solar panel. The signal processing capabilities of the ULPT 108 may be restricted to detecting a limited set of waveforms/messages at a very low rate.

The network connections between the proposed ESSC106 and ULPT 108, the access network 105 and the UE 102 are shown in Figure 2. The overlay macro cell transmits the primary synchronization signal (PSS), secondary synchronization signal (SSS), CRS and broadcast channel (BCH) whereby the ESSC 106 also remains in sleep state unless specified by the access network 105 or the UE 102.

In general, both the UE and the macro cell can wake up the ESSC, although a technically preferred option to let the macro cell perform this task given its knowledge of the local networking conditions. To this end, a ULPT 108 is used as will be described in more detail in relation to Figure 3.

Figure 3 schematically shows an ultra-low power transceiver (ULPT) 200 and an ESSC 202. ULPT 200 comprises an energy detector 204, network node identification unit 206 and a microcontroller 208 to manage the control plane operations. Each block of the ULPT 200 is used to enable or turn on the subsequent block to achieve power savings.

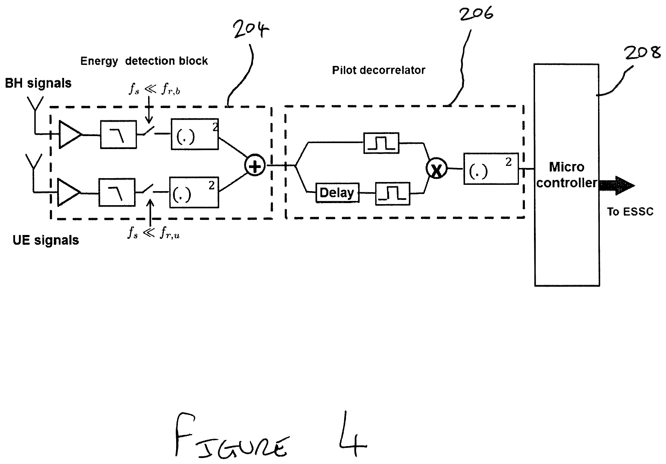

The energy detector 204 may be used to detect the control signals from either the UE or the access network/backhaul. Note that the access network and UE might communicate in two different frequencies, for this reason the energy detector block may consist of two or more energy detectors and filters depending on their frequencies and bandwidth of operation. Figure 4 shows the general schematic of one such energy detector in which two energy detectors are provided and in which the ESSC antenna signals are amplified, band-pass filtered, and subsampled at a frequency.

If energy detector 204 output signal energy exceeds a particular threshold, the remaining ULPT circuitry is enabled.

It should be appreciated that energy detector 204 may be any suitable detector operable to identify signals from UEs and the access network. Note that the energy detector can be designed using only a few transceivers and thus results in very low power consumption. The energy detector 204 identifies any signal exceeding a particular threshold, but it does not provide any information on their properties. For example, it cannot distinguish whether a detected signal sequence corresponds to the identity of the ESSC network node. Therefore, the ULPT also comprises a network node determination unit 206. In the embodiment shown in Figure 3, the network node determination unit 206 is a pilot decorrelator block 206 operable to estimate whether the energy detector output corresponds to the ESSC cell identity. This is achieved by estimating the energy of the pilot sequence, comparing with threshold energy levels and inputting this sequence to microcontroller 208. It should be appreciated that the pilot decorrelator may be any suitable determination unit operable to estimate whether the energy detector output corresponds to the ESSC cell identity.

Each ESSC can be identified using either a reference signal, such as Chu-Zadoff polyphase code sequence in LTE or a CDMA signature sequence such as a Gold code. Such families of code sequences rely on good auto-correlation and poor cross-correlation properties. The pilot decorrelator 206 inside the ULPT 200 may compute the auto-correlation, using delayed replicas of received sequence. If this exceeds a specific threshold, the microcontroller 208 is enabled.

The ESSC 202 may be an RF repeater incapable of determining if signals originate from either the access network or the UE. However, the ESSC 202 should wake-up/shut down in presence of UEs and/or upon the request of a macro cell. Furthermore, it should also allow for adaptive/dynamic control. The microcontroller 208 therefore decodes the output of correlation detector 206 and depending on the decoded signal, communicates with different components of the ESSC 202 to modify their operations and hence control of the overall ESSC 202 operation.

The ULPT control signals can concern multiple features of the ESSC functionality such as, but not limited to power amplifier output power levels, dynamic spectrum allocation and antenna pattern selection and beamforming.

For example, the access network may estimate the required power levels that the power amplifier of the ESSC must transmit with, in order to maximize the network capacity. These signals can be relayed to ULPT microcontroller 208 to modify the power output power levels of the ESSC 202 using a digitally controlled attenuator.

Also, the access network may estimate white spaces in the overall spectrum, similar to cognitive radio, and may relays the specific values to the ULPT 200. The ULPT 200 may modify the PLL frequencies of the RF mixer of the ESSC 202, responsive to the values relayed from the access network.

Further, the coverage and signal to noise ratio (SNR) between ESSC 202 and its UEs can be enhanced using multiple antennas and analog/RF beamforming. In this case, the access network based on estimates of ESSC position and its UEs positions, may calculate the beamformer weights to maximize SINR between the ESSC 202 and its UEs, and conveys beamformer weights to the ESSC 202 via the ULPT 200.

A low-power implementation of the ULPT 200 is shown in Figure 4, where the delay, correlation and energy (summation) depends on the specific Gold code sequence. If that specific code sequence is received, the pilot decorrelator 206 transmits the corresponding message to the microcontroller 208.

As can be seen in Figure 4, two energy detectors are provided in the energy detector block 204, to detect control signals from UEs and the access network at different frequency bands. The power consumption of the energy detector and network node determination unit is in the order of tens of milliwatts and can be driven using a 25 cm² solar panel.

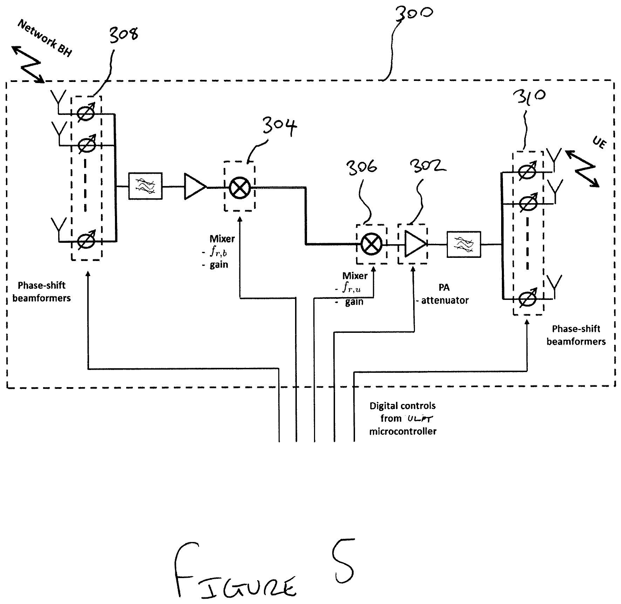

Figure 5 schematically shows Dynamic control from the ULPT microcontroller (not shown) to the ESSC 300 to implement spectral, power and spatial resource allocation techniques.

The ESSC 300 comprises a number of digitally controlled RF components such as power amplifiers/attenuators 302, PLLs 304, 306 and phase shifters 308, 310. The digital control from the ULPT microcontroller provides necessary flexibility/programmability to modulate radiated power over the spatial, spectral and temporal dimensions. The control flow from microcontroller to ESSC is shown in Figure 5.

Firstly, we consider dynamic spectrum allocation using PLLs 304, 306. Similar to a cognitive radio setup, the network can estimate unused spectral blocks for downlink as well as uplink communications between UE and ESSC 300. Note that enabling communications between a UE and ESSC 300 in these white-spaces will maximize the SINR between UE and ESSC. The same operation can be repeated to maximize the SINR between backhaul/access network and the ESSC. In this case, the network estimates the white-spaces in the backhaul spectrum.

For example, consider a baseband-RF upconverter, such as the Analog Devices (RTM) ADF4350 used in current macro cell implementations. This mixer can be programmed using SPI interface to operate at a carrier frequency estimated by the network by writing inside the registers present in ADF4350. The network conveys the desired spectral allocations to the ULPT. The ULPT micro-controller programs the appropriate registers

Next let us consider power amplifier 302 output power levels. The network estimates the required power levels at the ESSC 300 in order to either maximize the network capacity or to minimize the interference to the neighboring cells. This is possible on the basis of UE UL signal strength. For example, consider a digitally controller power amplifier attenuator combination such as Peregrine Semiconductor Corp. (RTM) PE4302. Programming the desired power levels to these components through the ULPT microcontroller would result in energy efficient operation. An alternative approach to modify power levels is through output power levels in the ADF4350.

Now let us consider antenna pattern selection and beamforming. The network can estimate desired beam patterns to either maximize the network capacity or to minimize the interference to the neighboring cells. Subsequently, the network provides these weights to the transceiver of each base station.

Beamforming can be achieved either using active transceivers or using passive components such as a phase shifter array. However, in ESSC 300 the number of transceivers is only one and the beamforming is limited to RF beamforming. Phase shifters 308, 310 comprise an array of RF digitally controlled phase shifters, such as Hittite Microwave Corp (RTM) MC928LP5E, each connected to a transmit antenna and beamform signals towards a specific user.

The proposed sensing transceiver (ULPT) controls in energy-sustaining small cells (ESSCs) and reduces power consumption in ESSCs.

The above described embodiments not only provide efficient wake-up of an ESSC, but also enable its configuration/re-configuration both upon ESSC wake-up and during subsequent operation. The above described embodiments also provide a centralized approach to dynamically control the physical operations of ESSCs in order to optimize performance (e.g., capacity enhancement via interference management) in the network.

The above described embodiments provide at least the following advantages. Firstly the main high-power communication chain of the ESSC is excluded from any overhead generated due to the reconfiguration of the ESSC which results in significant improvement of ESSC energy-efficiency at low costs. Secondly, the wake-up/configuration actions are carried out by an ultra-low power transceiver able to recognize cell-identity specific commands and implement them in an energy-efficient manner without using any sort of energy-intensive and cost-ineffective digital processing. Thirdly a low-complexity physical implementation is provided for future networks with split control/data plane and enabled sleep modes. Thus, it facilitates network deployment, mitigates radio-link and handover failures, and simplifies cell identification.

Although the above describes the ULPT being a separate entity to the ESSC, it should be appreciated that each ESSC may be provided with an integral ULPT. Also, it should be appreciated that a single ULPT may be operable control a plurality of ESSCs.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. An ultra-low power transceiver (108) for controlling an energy-sustaining small cell base station (106), the energy-sustaining small cell base station (106) operable for communication with a macro cell base station (104) or a user equipment (102) when in activated mode, the energy-sustaining small cell base station (106) being in sleep mode when not in activated mode, the transceiver (108) comprising:
a detector (204) operable to detect a control signal from the macro cell base station (104) or the user equipment (102);
a network node determination unit (206) operable responsive to the detector (204) to determine that the detected control signal relates to the energy-sustaining small cell base station (106); and
a controller (208) operable responsive to the determination unit (206) to generate one or more digital control signals based on the detected control signal to control the energy-sustaining small cell base station (106), so as to switch the energy-sustaining small cell base station (106) from said sleep mode to said activated mode, or vice versa, and
**characterised in that**:
depending on the digital control signals, modify and control the operation of the energy-sustaining small cell base station (106) in said activated mode.

2. A transceiver (108) according to claim 1, wherein the determination unit (206) is enabled when the output of the detector (204) changes by and/or exceeds a threshold value indicating that a control signal has been detected.

3. A transceiver (108) according to claim 1 or 2, wherein the controller (208) is enabled when the determination unit (206) determines that the control signal relates to the energy-sustaining small cell base station (106).

4. A transceiver (108) according to any preceding claim, wherein the controller (208) is operable to generate a digital control signal to control the operation frequency of the output of the energy-sustaining small cell base station (106) based on the detected control signal.

5. A transceiver (108) according to claim 1 or 4, wherein the controller (208) is operable to generate a digital control signal to control the power output of the energy-sustaining small cell base station (106) based on the detected control signal.

6. A transceiver (108) according to claim 1, 4 or 5, wherein the controller (208) is operable to generate a digital control signal to control the spatial orientation of the output of the energy-sustaining small cell base station (106) based on the detected control signal.

7. A transceiver (108) according to any preceding claim, wherein the detector (204) comprises two or more detectors operable to detect control signals of different frequencies.

8. A transceiver (108) according to any preceding claim, wherein the network node determination unit (206) is operable to determine that the control signal corresponds to the energy-sustaining small cell base station (106) using a polyphase code or Gold code.

9. An energy-sustaining small cell base station (106) operable for communication with the macro cell base station (104), wherein the energy-sustaining small cell base station (106) is operable to be controlled by the transceiver (108) according to any preceding claim.

10. An energy-sustaining small cell base station (106) according to claim 9, wherein the energy-sustaining small cell base station (106) when in communication with the macro cell base station (104) forms a wireless link for backhaul between the energy-sustaining small cell base station (106) and the macro cell base station (104).

11. The energy-sustaining small cell base station (106) according to claim 9 or 10, comprising a mixer (304, 306), a power amplifier (302) and phase-shift beamformers (308, 310), and wherein the controller (208) of the transceiver (108) is operable to generate one or more digital control signals based on the detected control signal to control the mixer (304, 306), power amplifier (302) and phase-shift beamformers (308, 310) of the energy-sustaining small cell base station (106) so as to control the operation frequency, power output and spatial orientation of the energy-sustaining small cell base station (106).

12. A telecommunications system (100), comprising:
an energy-sustaining small cell base station (106); and
a macro cell base station (104),
wherein the energy-sustaining small cell base station (106) is operable to communicate with the macro cell base station (104), and the energy-sustaining small cell base station (106) comprises an ultra-low power transceiver (108) for controlling the energy-sustaining small cell base station (106) according to any of claims 1 to 8.

13. A method of controlling an energy-sustaining small cell base station (106) with an ultra-low power transceiver (108), the energy-sustaining small cell base station (106) operable for communication with a macro cell base station (104) or a user equipment (102) when in activated mode, the energy-sustaining small cell base station (106) being in sleep mode when not in activated mode, the transceiver (108) comprising a detector (204), a network node determination unit (206) and a controller (208), the method comprising:
detecting a control signal from the macro cell base station (104) or the user equipment (102) at the detector (204) based on determining that the output of the detector (204) exceeds a threshold value, thereby indicating that the control signal has been detected;
enabling the determination unit (206) for determining that the detected control signal relates to the energy-sustaining small cell base station (106);
enabling the controller (208) and generating one or more digital control signals based on the detected control signal to control the energy-sustaining small cell base station (106); and
controlling the energy-sustaining small cell base station (106) based on the generated digital control signals so as to switch the energy-sustaining small cell base station (106) from said sleep mode to said activated mode, or vice versa, and
**characterised in that**:
depending on the digital control signals, modify and control the operation of the energy-sustaining small cell base station (106) in said activated mode.

14. A computer program product operable when executed on a computer to perform the method of claim 13.

## Patentansprüche

1. Sendeempfänger (108) mit sehr geringer Leistung zum Steuern einer energetisch nachhaltigen Kleinzellen-Basisstation (106), wobei die energetisch nachhaltige Kleinzellen-Basisstation (106) im aktivierten Modus für Kommunikation mit einer Makrozellen-Basisstation (104) oder einem Nutzergerät (102) betriebsfähig ist, wobei sich die energetisch nachhaltige Kleinzellen-Basisstation (106) im Schlafmodus befindet, wenn sie nicht im aktivierten Modus ist, wobei der Sendeempfänger (108) Folgendes umfasst:
eine Erfassungseinrichtung (204), die betriebsfähig ist, ein Steuersignal von der Makrozellen-Basisstation (104) oder dem Nutzergerät (102) zu erfassen,
eine Netzknoten-Bestimmungseinheit (206), die auf die Erfassungseinheit (204) ansprechend betriebsfähig ist, zu bestimmen, dass das erfasste Steuersignal die energetisch nachhaltige Kleinzellen-Basisstation (106) betrifft, und
eine Steuereinrichtung (208), die auf die Bestimmungseinheit (206) ansprechend betriebsfähig ist, auf Grundlage des erfassten Steuersignals ein oder mehrere digitale Steuersignale zu erzeugen, um die energetisch nachhaltige Kleinzellen-Basisstation (106) so zu steuern, dass die energetisch nachhaltige Kleinzellen-Basisstation (106) vom Schlafmodus in den aktivierten Modus oder umgekehrt geschaltet wird, und **dadurch gekennzeichnet, dass**
abhängig von den digitalen Steuersignalen, Modifizieren und Steuern des Betriebs der energetisch nachhaltigen Kleinzellen-Basisstation (106) im aktivierten Modus.

2. Sendeempfänger (108) nach Anspruch 1, wobei die Bestimmungseinheit (206) aktiviert wird, wenn der Ausgang der Erfassungseinrichtung (204) sich um einen Grenzwert ändert und/oder diesen überschreitet, wodurch angezeigt wird, dass ein Steuersignal erfasst wurde.

3. Sendeempfänger (108) nach Anspruch 1 oder 2, wobei die Steuereinrichtung (208) aktiviert wird, wenn die Bestimmungseinheit (206) bestimmt, dass das Steuersignal die energetisch nachhaltige Kleinzellen-Basisstation (106) betrifft.

4. Sendeempfänger (108) nach einem der vorhergehenden Ansprüche, wobei die Steuereinrichtung (208) betriebsfähig ist, auf Grundlage des erfassten Steuersignals ein digitales Steuersignal zu erzeugen, um die Betriebsfrequenz des Ausgangs der energetisch nachhaltigen Kleinzellen-Basisstation (106) zu steuern.

5. Sendeempfänger (108) nach Anspruch 1 oder 4, wobei die Steuereinrichtung (208) betriebsfähig ist, auf Grundlage des erfassten Steuersignals ein digitales Steuersignal zu erzeugen, um den Leistungsausgang der energetisch nachhaltigen Kleinzellen-Basisstation (106) zu steuern.

6. Sendeempfänger (108) nach Anspruch 1, 4 oder 5, wobei die Steuereinrichtung (208) betriebsfähig ist, auf Grundlage des erfassten Steuersignals ein digitales Steuersignal zu erzeugen, um die räumliche Ausrichtung des Ausgangs der energetisch nachhaltigen Kleinzellen-Basisstation (106) zu steuern.

7. Sendeempfänger (108) nach einem der vorhergehenden Ansprüche, wobei die Erfassungseinrichtung (204) zwei oder mehr Erfassungseinrichtungen umfasst, die betriebsfähig sind, Steuersignale verschiedener Frequenzen zu erfassen.

8. Sendeempfänger (108) nach einem der vorhergehenden Ansprüche, wobei die Netzknoten-Bestimmungseinheit (206) betriebsfähig ist, mittels eines Mehrphasencodes oder Gold-Codes zu bestimmen, dass das Steuersignal der energetisch nachhaltigen Kleinzellen-Basisstation (106) entspricht.

9. Energetisch nachhaltige Kleinzellen-Basisstation (106), die für Kommunikation mit der Makrozellen-Basisstation (104) betriebsfähig ist, wobei die energetisch nachhaltige Kleinzellen-Basisstation (106) betriebsfähig ist, durch den Sendeempfänger (108) nach einem der vorhergehenden Ansprüche gesteuert zu werden.

10. Energetisch nachhaltige Kleinzellen-Basisstation (106) nach Anspruch 9, wobei die energetisch nachhaltige Kleinzellen-Basisstation (106), wenn sie sich mit der Makrozellen-Basisstation (104) in Kommunikation befindet, eine drahtlose Verbindung zur Anbindung zwischen der energetisch nachhaltigen Kleinzellen-Basisstation (106) und der Makrozellen-Basisstation (104) bildet.

11. Energetisch nachhaltige Kleinzellen-Basisstation (106) nach Anspruch 9 oder 10, umfassend eine Mischstufe (304, 306), einen Leistungsverstärker (302) und Phasenverschiebungs-Keulenformer (308, 310), wobei die Steuereinrichtung (208) des Sendeempfängers (108) betriebsfähig ist, auf Grundlage des erfassten Steuersignals ein oder mehrere digitale Steuersignale zu erzeugen, um die Mischstufe (304, 306), den Leistungsverstärker (302) und die Phasenverschiebungs-Keulenformer (308, 310) der energetisch nachhaltigen Kleinzellen-Basisstation (106) so zu steuern, dass die Betriebsfrequenz, der Leistungsausgang und die räumliche Ausrichtung der energetisch nachhaltigen Kleinzellen-Basisstation (106) gesteuert werden.

12. Telekommunikationssystem (100), umfassend:
eine energetisch nachhaltige Kleinzellen-Basisstation (106) und
eine Makrozellen-Basisstation (104),
wobei die energetisch nachhaltige Kleinzellen-Basisstation (106) betriebsfähig ist, mit der Makrozellen-Basisstation (104) zu kommunizieren, und die energetisch nachhaltige Kleinzellen-Basisstation (106) einen Sendeempfänger (108) mit sehr geringer Leistung zum Steuern der energetisch nachhaltigen Kleinzellen-Basisstation (106) nach einem der Ansprüche 1 bis 8 umfasst.

13. Verfahren zum Steuern einer energetisch nachhaltigen Kleinzellen-Basisstation (106) mit einem Sendeempfänger (108) mit sehr geringer Leistung, wobei die energetisch nachhaltige Kleinzellen-Basisstation (106) im aktivierten Modus für Kommunikation mit einer Makrozellen-Basisstation (104) oder einem Nutzergerät (102) betriebsfähig ist, wobei sich die energetisch nachhaltige Kleinzellen-Basisstation (106) im Schlafmodus befindet, wenn sie nicht im aktivierten Modus ist, wobei der Sendeempfänger (108) eine Erfassungseinrichtung (204), eine Netzknoten-Bestimmungseinheit (206) und eine Steuereinrichtung (208) umfasst, wobei das Verfahren Folgendes umfasst:
Erfassen eines Steuersignals von der Makrozellen-Basisstation (104) oder dem Nutzergerät (102) an der Erfassungseinrichtung (204) auf Grundlage eines Bestimmens, dass der Ausgang der Erfassungseinrichtung (204) einen Grenzwert überschreitet, wodurch angezeigt wird, dass das Steuersignal erfasst wurde,
Aktivieren der Bestimmungseinheit (206), um zu bestimmen, dass das erfasste Steuersignal die energetisch nachhaltige Kleinzellen-Basisstation (106) betrifft, Aktivieren der Steuereinrichtung (208) und Erzeugen eines oder mehrerer digitaler Steuersignale auf Grundlage des erfassten Steuersignals, um die energetisch nachhaltige Kleinzellen-Basisstation (106) zu steuern, und
Steuern der energetisch nachhaltigen Kleinzellen-Basisstation (106) auf Grundlage der erzeugten digitalen Steuersignale so, dass die energetisch nachhaltige Kleinzellen-Basisstation (106) vom Schlafmodus in den aktivierten Modus oder umgekehrt geschaltet wird, und
**dadurch gekennzeichnet, dass**
abhängig von den digitalen Steuersignalen der Betrieb der energetisch nachhaltigen Kleinzellen-Basisstation (106) im aktivierten Modus modifiziert und gesteuert wird.

14. Computerprogrammprodukt, das bei Ausführung auf einem Computer betriebsfähig ist, das Verfahren nach Anspruch 13 durchzuführen.

## Revendications

1. Émetteur-récepteur à ultra-faible puissance (108) destiné à commander une station de base à petite cellule à énergie durable (106), la station de base à petite cellule à énergie durable (106) pouvant fonctionner pour une communication avec une station de base à macro cellule (104) ou un équipement d'utilisateur (102) en mode activé, la station de base à petite cellule à énergie durable (106) étant en mode veille lorsqu'elle n'est pas en mode activé, l'émetteur-récepteur (108) comprenant :
un détecteur (204) pouvant fonctionner pour détecter un signal de commande provenant de la station de base à macro cellule (104) ou de l'équipement d'utilisateur (102) ;
une unité de détermination de nœud de réseau (206) pouvant fonctionner en réponse au détecteur (204) pour déterminer que le signal de commande détecté est relatif à la station de base à petite cellule à énergie durable (106) ; et
un contrôleur (208) pouvant fonctionner en réponse à l'unité de détermination (206) pour générer un ou plusieurs signaux de commande numériques sur la base du signal de commande détecté pour commander la station de base à petite cellule à énergie durable (106) de façon à faire passer la station de base à petite cellule à énergie durable (106) dudit mode veille audit mode activé ou vice-versa, et
**caractérisé en ce que** :
en fonction des signaux de commande numériques, modifier et commander le fonctionnement de la station de base à petite cellule à énergie durable (106) dans ledit mode activé.

2. Émetteur-récepteur (108) selon la revendication 1, dans lequel l'unité de détermination (206) est activée lorsque la sortie du détecteur (204) est modifiée d'une valeur de seuil et/ou la dépasse, celle-ci indiquant qu'un signal de commande a été détecté.

3. Émetteur-récepteur (108) selon la revendication 1 ou 2, dans lequel le contrôleur (208) est activé lorsque l'unité de détermination (206) détermine que le signal de commande est relatif à la station de base à petite cellule à énergie durable (106).

4. Émetteur-récepteur (108) selon l'une quelconque des revendications précédentes, dans lequel le contrôleur (208) peut fonctionner pour générer un signal de commande numérique pour commander la fréquence de fonctionnement de la sortie de la station de base à petite cellule à énergie durable (106) sur la base du signal de commande détecté.

5. Émetteur-récepteur (108) selon la revendication 1 ou 4, dans lequel le contrôleur (208) peut fonctionner pour générer un signal de commande numérique pour commander la sortie de puissance de la station de base à petite cellule à énergie durable (106) sur la base du signal de commande détecté.

6. Émetteur-récepteur (108) selon la revendication 1, 4 ou 5, dans lequel le contrôleur (208) peut fonctionner pour générer un signal de commande numérique pour commander l'orientation spatiale de la sortie de la station de base à petite cellule à énergie durable (106) sur la base du signal de commande détecté.

7. Émetteur-récepteur (108) selon l'une quelconque des revendications précédentes, dans lequel le détecteur (204) comprend deux détecteurs ou plus pouvant fonctionner pour détecter des signaux de commande de différentes fréquences.

8. Émetteur-récepteur (108) selon l'une quelconque des revendications précédentes, dans lequel l'unité de détermination de nœud de réseau (206) peut fonctionner pour déterminer que le signal de commande correspond à la station de base à petite cellule à énergie durable (106) au moyen d'un code polyphasé ou d'un code Gold.

9. Station de base à petite cellule à énergie durable (106) pouvant fonctionner pour une communication avec la station de base à macro cellule (104), dans laquelle la station de base à petite cellule à énergie durable (106) peut fonctionner pour être commandée par l'émetteur-récepteur (108) selon l'une quelconque des revendications précédentes.

10. Station de base à petite cellule à énergie durable (106) selon la revendication 9, dans laquelle la station de base à petite cellule à énergie durable (106), en communication avec la station de base à macro cellule (104), forme une liaison sans fil pour la liaison entre la station de base à petite cellule à énergie durable (106) et la station de base à macro cellule (104).

11. Station de base à petite cellule à énergie durable (106) selon la revendication 9 ou 10, comprenant un mélangeur (304, 306), un amplificateur de puissance (302) et des formeurs de faisceaux à décalage de phase (308, 310), et dans laquelle le contrôleur (208) de l'émetteur-récepteur (108) peut fonctionner pour générer un ou plusieurs signaux de commande numériques sur la base du signal de commande détecté pour commander le mélangeur (304, 306), l'amplificateur de puissance (302) et les formeurs de faisceaux à décalage de phase (308, 310) de la station de base à petite cellule à énergie durable (106) de façon à commander la fréquence de fonctionnement, la sortie de puissance et l'orientation spatiale de la station de base à petite cellule à énergie durable (106).

12. Système de télécommunications (100) comprenant :
une station de base à petite cellule à énergie durable (106) ; et
une station de base à macro cellule (104),
dans lequel la station de base à petite cellule à énergie durable (106) peut fonctionner pour communiquer avec la station de base à macro cellule (104), et la station de base à petite cellule à énergie durable (106) comprend un émetteur-récepteur à ultra faible puissance (108) destiné à commander la station de base à petite cellule à énergie durable (106) selon l'une quelconque des revendications 1 à 8.

13. Procédé de commande d'une station de base à petite cellule à énergie durable (106) au moyen d'un émetteur-récepteur à ultra faible puissance (108), la station de base à petite cellule à énergie durable (106) pouvant fonctionner pour une communication avec une station de base à macro cellule (104) ou un équipement d'utilisateur (102) en mode activé, la station de base à petite cellule à énergie durable (106) étant en mode veille lorsqu'elle n'est pas en mode activé, l'émetteur-récepteur (108) comprenant un détecteur (204), une unité de détermination de nœud de réseau (206) et un contrôleur (208), le procédé comprenant :
la détection d'un signal de commande provenant de la station de base à macro cellule (104) ou de l'équipement d'utilisateur (102) par un détecteur (204) sur la base de la détermination du fait que la sortie du détecteur (204) dépasse une valeur de seuil, indiquant ainsi que le signal de commande a été détecté ;
l'activation de l'unité de détermination (206) pour déterminer que le signal de commande détecté est relatif à la station de base à petite cellule à énergie durable (106) ;
l'activation du contrôleur (208) et la génération d'un ou plusieurs signaux de commande numériques sur la base du signal de commande détecté pour commander la station de base à petite cellule à énergie durable (106) ; et
la commande de la station de base à petite cellule à énergie durable (106) sur la base des signaux de commande numériques de façon à faire passer la station de base à petite cellule à énergie durable (106) dudit mode veille audit mode activé ou vice-versa, et
**caractérisé en ce que** :
en fonction des signaux de commande numériques, la modification et la commande du fonctionnement de la station de base à petite cellule à énergie durable (106) dans ledit mode activé.

14. Produit de programme informatique pouvant fonctionner, lorsqu'il est exécuté sur un ordinateur, pour exécuter le procédé selon la revendication 13.
